# EUROPEAN PATENT APPLICATION

(11) **EP 3 653 373 A1**
(43) Date of publication of application: **20.05.2020**
(21) Application number: 19209476.1
(22) Date of filing: 15.11.2019
(51) Int. Cl.: B32B 3/26, B32B 5/02, B32B 5/26, B32B 27/12, B32B 7/12, B32B 27/36, B32B 27/40, B32B 27/34, B32B 3/06

(54) **CUSHION COMPOSITE STRUCTURE, AND SHOE PAD AND PERSONAL PROTECTIVE EQUIPMENT USING THE SAME**

(30) Priority: 19.11.2018 TW 107215657 U
(71) Applicant: TSM Smart Materials Co., Ltd., Taoyuan City 325 (TW)
(72) Inventor: JUI, Hsiang-Yiang, Taoyuan City 325 (TW); SIE, Bing-Han, Taoyuan City 325 (TW)
(74) Representative: Ter Meer Steinmeister & Partner

(57) **Abstract**

A cushion composite structure having a plurality of meshes is provided, including a support layer and a fabric layer. The support layer includes a support structure and a polymer layer. The polymer layer is disposed on the support layer and in the meshes, wherein the Tm point of the polymer layer is less than 70°C. The fabric layer is disposed on the support layer.

## Description

This application claims priority of Taiwan Patent Application No. 107215657, filed on November 19, 2018.

### BACKGROUND OF THE DISCLOSURE

### Field of the Disclosure

The embodiments of the present disclosure relate to a cushion composite structure, and a shoe pad and personal protective equipment using the same.

### Description of the Related Art

Cushions with impact resistance used in sporting goods, medical protective gear, etc. are usually made of hard plates, such as wood plates or plastic plates, but these plates cannot meet the requirements of the ordinary user because the plates are not soft or comfortable. However, if conventional materials which are soft, comfortable, and commercially available are used to make the cushions, the mechanical strength and impact resistance of the cushions cannot be maintained. Moreover, conventional soft cushions have low breathability, and if holes are formed on the cushions for breathability, the mechanical strength of the cushions may be reduced, and the breathability of the cushions may not be enough if no enough holes are formed. Furthermore, conventional cushions cannot be reshaped based on different users' requirements.

### BRIEF SUMMARY OF DISCLOSURE

A cushion composite structure having a plurality of meshes is provided, including a support layer and a fabric layer. The support layer includes a support structure and a polymer layer. The polymer layer is disposed on the support layer and in the meshes, wherein the Tm point of the polymer layer is less than 70°C. The fabric layer is disposed on the support layer.

In some embodiments, the cushion composite structure further includes a local reinforcement structure directly disposed on the support layer or the fabric layer, and is disposed in the meshes. In some embodiments, the local reinforcement structure includes a plurality of local reinforcement units separated from each other by a distance. In some embodiments, each of the local reinforcement units has a strip-shape. In some embodiments, the polymer layer still has the crystalline melting point after being heated over the crystalline melting point and cooled down, and is still reproducible after several repetitions. In some embodiments, the Shore durometer of the cushion composite structure is greater than 45 under 30°C, and is less than 2 under 70°C. In some embodiments, the polymer layer includes chain-entangled polymer materials.

In some embodiments, the support layer includes meshes with a shrinkage ratio less than 50%. In some embodiments, the cushion composite structure further includes an adhesive layer disposed between the support layer and the fabric layer, and the adhesive layer has meshes with identical shapes to the meshes of the support layer. In some embodiments, a lamination of the fabric layer and the support layer is performed through the polymer layer. In some embodiments, the cushion composite structure further includes another fabric layer, wherein the two fabric layers are disposed on opposite sides of the support layer. In some embodiments, the support layer has a Young's modulus higher than 10⁸ Pa under room temperature. In some embodiments, the polymer layer includes a random copolymer or a block copolymer including at least one of the polyester, polyurethane, polyamide, or polyol.

A shoe pad made from the aforementioned cushion composite structure is provided in some embodiments, which includes a cushion portion and an arch portion arched from the cushion portion.

Personal protective equipment made from the aforementioned cushion composite structure is provided in some embodiments of the present disclosure, wherein a portion of the support layer is exposed from the fabric layer. In some embodiments, the personal protective equipment has a circular shape, and the fabric layer is positioned inside the personal protective equipment.

### BRIEF DESCRIPTION OF DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. 1A is a top view of a cushion composite structure in some embodiments of the present disclosure.
FIG. 1B is a cross-sectional view of the cushion composite structure in FIG. 1A.
FIG. 1C is a cross-sectional view of a cushion composite structure in some embodiments of the present disclosure.
FIG. 2A is a cross-sectional view of a portion of the cushion composite structure in some embodiments of the present disclosure.
FIG. 2B is a cross-sectional view of a portion of the cushion composite structure in some embodiments of the present disclosure.
FIG. 2C is a cross-sectional view of a portion of the cushion composite structure in some embodiments of the present disclosure.
FIG. 3A is a top view of a cushion composite structure in some embodiments of the present disclosure.
FIG. 3B is a top view of a cushion composite structure in some embodiments of the present disclosure.
FIG. 3C is a cross-sectional view of a cushion composite structure in some embodiments of the present disclosure.
FIG. 3D is a cross-sectional view of a cushion composite structure in some embodiments of the present disclosure.
FIG. 3E is a cross-sectional view of a cushion composite structure in some embodiments of the present disclosure.
FIG. 4A is a top view of a cushion composite structure in some embodiments of the present disclosure.
FIG. 4B is a cross-sectional view of a cushion composite structure in some embodiments of the present disclosure.
FIG. 4C is a side view of a cushion composite structure in some embodiments of the present disclosure.
FIG. 4D is a schematic view of a cushion composite structure in some embodiments of the present disclosure.
FIG. 5 is a schematic view of a shoe pad in some embodiments of the present disclosure.

### DETAILED DESCRIPTION OF DISCLOSURE

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are in direct contact, and may also include embodiments in which additional features may be disposed between the first and second features, such that the first and second features may not be in direct contact.

In addition, the present disclosure may repeat reference numerals and/or letters in the various examples. This repetition is for the purpose of simplicity and clarity and does not in itself dictate a relationship between the various embodiments and/or configurations discussed. Moreover, the formation of a feature on, connected to, and/or coupled to another feature in the present disclosure that follows may include embodiments in which the features are in direct contact, and may also include embodiments in which additional features may be disposed interposing the features, such that the features may not be in direct contact. In addition, spatially relative terms, for example, "vertical," "above," "over," "below,", "bottom," etc. as well as derivatives thereof (e.g., "downwardly," "upwardly," etc.) are used for ease of the present disclosure of one features relationship to another feature. The spatially relative terms are intended to cover different orientations of the device including the features.

Unless defined otherwise, all technical and scientific terms used herein have the same meaning as commonly understood by one of ordinary skill in the art to which this invention belongs. It should be appreciated that each term, which is defined in a commonly used dictionary, should be interpreted as having a meaning conforming to the relative skills and the background or the context of the present disclosure, and should not be interpreted in an idealized or overly formal manner unless defined otherwise.

It should be understood that, although the terms first, second, third etc. may be used herein to describe various elements, components, regions, layers, portions and/or sections, these elements, components, regions, layers, portions and/or sections should not be limited by these terms. These terms are only used to distinguish one element, component, region, layer, portion or section from another element, component, region, layer, position or section. Thus, a first element, component, region, layer, portion or section discussed below could be termed a second element, component, region, layer, portion or section without departing from the teachings of the present disclosure.

The terms "about" and "substantially" typically mean +/- 20% of the stated value, more typically +/- 10% of the stated value, more typically +/- 5% of the stated value, more typically +/- 3% of the stated value, more typically +/- 2% of the stated value, more typically +/- 1% of the stated value and even more typically +/- 0.5% of the stated value. The stated value of the present disclosure is an approximate value. When there is no specific description, the stated value includes the meaning of "about" or "substantially".

Furthermore, the phrase "in a range between a first value and a second value" or "in a range from a first value to a second value" indicates that the range includes the first value, the second value, and other values between them.

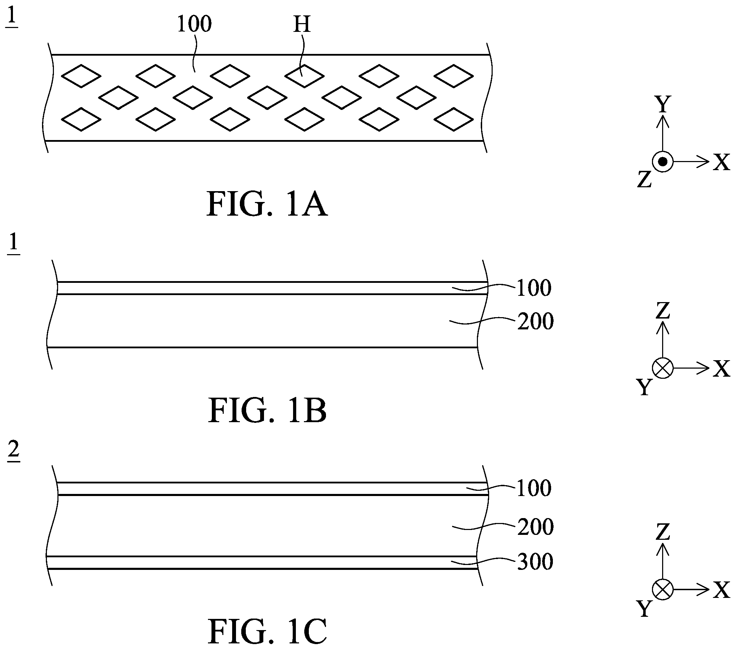

First, referring to FIGs. 1A and 1B, FIG. 1A is a top view of a cushion composite structure 1 in some embodiments of the present disclosure, and FIG. 1B is a side view of the cushion composite structure 1. The cushion composite structure 1 includes a fabric layer 100 and a support layer 200, wherein the fabric layer 100 is disposed on the support layer 200. In FIG. 1A, the cushion composite structure 1 has a plurality of meshes H to achieve a good breathability. In some embodiments, the shape of the meshes H may be rhomboidal. Although the cushion composite structure 1 in FIG. 1A is bar-shaped, the present disclosure is not limited thereto. For example, the cushion composite structure 1 may has a sheet-like shape, depending on requirements.

Although the fabric layer 100 is only disposed on one side of the support layer 200 of the cushion composite structure 1 in previous embodiments, the present disclosure is not limited thereto. For example, FIG. 1C shows a cushion composite structure 2 in other embodiments of the present disclosure, wherein a fabric layer 300 may be disposed on another side of the support layer 200. As a result, the softness and comfort that users require may be provided.

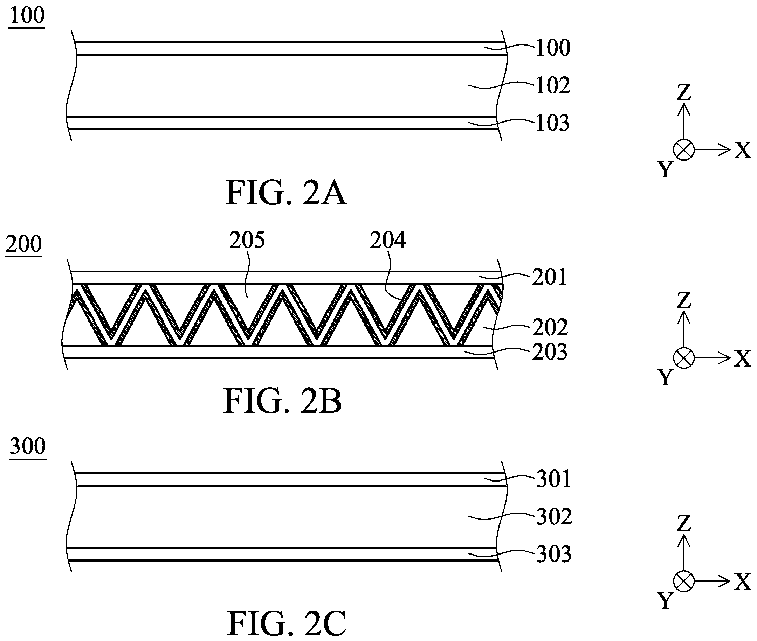

FIG. 2A is a cross-sectional view of the fabric layer 100, FIG. 2B is a cross-sectional view of the support layer 200, and FIG. 2C is a cross-sectional view of the fabric layer 300. In some embodiments, the fabric layer 100 includes a middle layer 102 and surface layers 101 and 103 disposed on opposite sides of the middle layer 102. The surface layers 101 and 103 may have meshes (such as the rhomboidal meshes H), and the middle layer 102 may include mono yarn of synthetic polymer fiber and may be formed by weaving. The surface layers 101 and 103 may be supported by the high-density network structure formed therein to prevent excessive deformation, so the mechanical strength of the fabric layer 100 may be enhanced, and the degree of color change of the fabric layer 100 may be reduced. Moreover, the fabric layer 100 may directly contact human body to provide softness and comfort. Furthermore, the fabric layer 100 may include waterproof or antibacterial fabric materials in some embodiments. The fabric layer 300 may include a middle layer 302 and surface layers 301 and 303 disposed on opposite sides of the middle layer 302, the structure and the material of the fabric layer 300 are similar to that of the fabric layer 100, and are not repeated.

The support layer 200 mainly includes a support structure 202 and surface layers 201 and 203 disposed on opposite sides of the support structure 202. In some embodiments, the surface layer 201, the support layer 202 and the surface layer 203 may be formed of an identical material. In some embodiments, the support structure 202 may have a network structure, and a polymer layer 204 may be coated on the surface of the support structure 202. In other words, in FIG. 2B, when viewed in a direction perpendicular to the normal direction of the support layer 200 (e.g. viewed in Y direction), the support layer 200 may include a plurality of holes 205, and the polymer layer 204 does not fully fill the vacancies of the support layer 200. As a result, the breathability of the support layer 200 may be enhanced. In some embodiments, the support structure 202 may be formed of flexible materials.

In some embodiments, the supporting layer 200 further includes the meshes H, and the meshes H have a shrinkage ratio less than 50%, such as less than 40%, less than 30%, or less than 20%. The definition of the shrinkage ratio is a ratio of the average diameter of the meshes H before the polymer layer 204 is formed thereon minus the average diameter of the meshes H after the polymer layer 204 is formed thereon, and then divided by the average diameter of the meshes H before the polymer layer 204 is formed thereon. As a result, the breathability may be further improved.

In some embodiments, the material of the polymer layer 204 may include random copolymer or block copolymer of, for example, polyester (e.g. polycaprolactone (PCL)), polyurethane (PU), polyamide (PA), polyol, etc. In some embodiments, the crystalline melting point (Tm) of the polymer layer 204 is less than about 70°C, so the polymer layer 204 may be heated to a temperature over its crystalline melting point through a microwave or a hair drier, which work at a relatively low temperature. As a result, the cushion composite structure 1 may be handled by an ordinary user. In some embodiments, the crystalline melting point of the polymer layer 204 is greater than about 65°C to ensure the polymer layer 204 has good mechanical properties. In some embodiments, the polymer layer 204 includes chain-entangled polymer materials to enhance its mechanical strength and impact resistance. As a result, the mechanical properties of the cushion composite structure 1 may be enhanced by coating the polymer layer 204 on the surface of the support structure 202.

In some embodiments, the polymer layer 204 may be formed by heating the polymer material for easy processing, and then coating the polymer material on the surface of the support structure 202 (such as by forming the polymer layer 204 by hot coating process, which is called a "heating method" later), rather than be formed by blending the polymer material with organic compounds having low molecular weight (Mw, such as less than 1000) to reduce the viscosity. As a result, compounds with low molecular weight may be prevented from remaining in the polymer layer 204, so the mechanical properties (e.g. adhesive force, maximum stress, hardness, etc.) of the polymer layer 204 may be enhanced, and the residue with low molecular weight can be prevented from releasing during usage, so the resulting environmental and safety problems can be prevented as well.

Table 1 shows mechanical properties of the cushion composite structure 1 with the polymer layer 204 formed by the heating method in some embodiments, and Table 2 shows mechanical properties of the cushion composite structure 1 with the polymer layer 204 formed by blending the polymer with low molecular weight compounds (which is called a "blending method" later) in some comparative examples.

**Table 1- cushion composite structure 1 with the polymer layer 204 formed by the heating method**

| Test Items / Temperature | 30°C | 40°C | 50°C | 60°C | 70°C |
|---|---|---|---|---|---|
| Shore Durometer | 49 | 23 | 4 | 4 | 1 |
| Maximum Stress (MPa) | 119.2 | 79.3 | 78.1 | 78.33 | 75.7 |
| Adhesive Force (MPa) | 26.7 | 1.569 | 0.066 | 0.044 | 0.033 |

**Table 2- cushion composite structure with the polymer layer 204 formed by the blending method**

| Test Items / Temperature | 30°C | 40°C | 50°C | 60°C | 70°C |
|---|---|---|---|---|---|
| Shore Durometer | 45 | 17 | 7 | 5 | 4 |
| Maximum Stress (MPa) | 60.074 | 53.408 | 44.63 | 43.063 | 40.065 |
| Adhesive Force (MPa) | 3.201 | 0.251 | 0.115 | 0.106 | 0.05 |

In particular, the Shore durometer (D) may be measured by a Shore scleroscope, which uses an indenter to hit the surface of the material in a direction perpendicular to the cushion composite structure. The maximum stresses are measured from stretching a 3cm^{∗}10cm cushion composite structure under 100mm/min. Regarding the adhesive forces, two 3cm^{∗}10cm cushion composite structures are pressed together with 4kg/cm² pressure, each of the cushion composite structures has a 3cm space at the end remaining uncombined with another cushion composite structure for the stretch test, and the adhesive force is the stress when the cushion composite structures are tearing during the stretch test. Furthermore, the fabric layer 100 plus the support layer 200 has a maximum stress of 12.09MPa under 30°C.

It should be noted that the polymer layer 204 formed by the heating method has better mechanical properties than the polymer layer 204 formed by the blending method by comparing the results in Table 1 and Table 2. For example, in Table 1, the Shore durometer of the cushion composite structure 1 is greater than 45 under 30°C and less than 2 under 70°C, the adhesive force is greater than 20MPa under 30°C, and the maximum stress is greater than 100MPa under 30°C. As a result, the cushion composite structure 1 may be deformed at a higher temperature (such as about 65°C to about 70°C), and the shape of the cushion composite structure 1 may be fixed at a lower temperature (such as room temperature) with good adhesive force and impact resistance.

Tables 3 and 4 show thermal properties of the polymer layers 204 formed by the heating method and the blending method, respectively.

**Table 3-the polymer layer 204 formed by heating method**

| Tₘ₁(°C) | ΔHₘ₁ (J/g) | Tₘ₂(°C) | ΔHₘ₂ (J/g) |
|---|---|---|---|
| 66.4 | 44.1 | 255.7 | 17.1 |

| | | | |
|---|---|---|---|
| Note: After multiple DSC measurements, Tₘ₁ of the polymer layer 204 still remains, and there are not many differences in Tₘ₁ and ΔHₘ₁. | | | |

**Table 4-the polymer layer 204 formed by the blending method**

| Tₘ₁(°C) | ΔHₘ₁ (J/g) | Tₘ₂(°C) | ΔHₘ₂ (J/g) |
|---|---|---|---|
| 61.3 | 41.2 | 251.9 | 18.4 |

| | | | |
|---|---|---|---|
| Note: Tₘ₁ and ΔHₘ₁ of the polymer layer 204 cannot be measured during the second DSC measurement, which means the crystalline structure in the polymer layer 204 is destroyed and is not easily regenerated. | | | |

The thermal properties of the polymer layer 204 are measured by differential scanning calorimetry (DSC). In particular, the sample is first heated from 30°C to 300°C in 20°C/min, kept in 300°C for 5 mins, and then cooled down from 300°C to 30°C to finish the measurement.

It should be noted from the results shown in Table 3 and Table 4 that the polymer layer 204 formed by the heating method has a higher crystalline melting point than the polymer layer 204 formed by the blending method. The crystalline melting point of the material is related to the strength, so the mechanical strength of the polymer layer 204 of Table 3 is better than that of Table 4.

Moreover, the polymer layer 204 formed by blending may lose its crystalline melting point after being heated and cooled down once, because the polymer layer 204 is interfered with by the remaining low molecular weight compound, which results in the polymer layer 204 losing its chain-entangled structure and lowering its mechanical strength. However, the polymer layer 204 formed by the heating method may keep its structure and the crystalline melting point after being heated (over its crystalline melting point, for example) and cooled down once, because the polymer layer 204 has a chain-entangled structure. For example, after being heated and cooled down over several times (e.g. 30 times), the polymer layer 204 still keeps its mechanical strength and the crystalline melting point. As a result, the cushion composite structure 1 may be deformed by heating multiple it times for reuse.

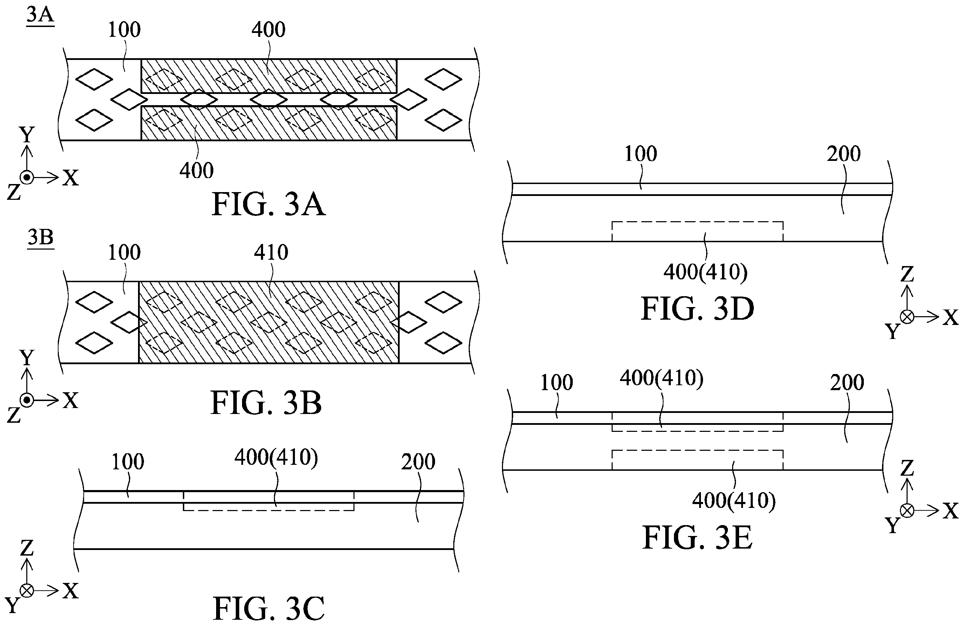

In some embodiments, a local reinforcement structure may be provided on the fabric layer 100 and/or the support layer 200 to further enhance the mechanical strength of the cushion composite structure. For example, FIG. 3A is a top view of a cushion composite structure 3A in some embodiments of the present disclosure. In FIG. 3A, a plurality of strip-shaped local reinforcement structures 400 (local reinforcement units) may be provided on the cushion composite structure 3A. The local reinforcement structure 400 may be disposed in the meshes of the fabric layer 100 and/or the support layer 200. In some embodiments, the local reinforcement structure 400 directly contacts the fabric layer 100 and/or the support layer 200.

Although the local reinforcement structures 400 are strip-shaped, the present disclosure is not limited thereto. For example, FIG. 3B is a top view of a cushion composite structure 3B in some embodiments of the present disclosure. In FIG. 3B, a plurality of plate-shaped local reinforcement structures 410 (local reinforcement units) may be provided on the cushion composite structure 3B. Strip-shaped local reinforcement structures 400 may reduce the material usage, and the plate-shaped local reinforcement structures 410 may further enhance the mechanical strength of the cushion composite structure 3B.

FIGs. 3C to 3E are cross-sectional views of the cushion composite structures having the local reinforcement structures 400 or 410 in some embodiments. The local reinforcement structures 400 or 410 may be disposed on a side adjacent to the fabric layer 100 (FIG. 3C), on a side adjacent to the support layer 200 (FIG. 3D), or on opposite sides of the cushion composite structure (FIG. 3E). It should be noted that the local reinforcement structures 400 or 410 are disposed in the meshes of the fabric layer 100 or the support layer 200 without protrude from the fabric layer 100 or the support layer 200. In other words, the local reinforcement structures 400 or 410 may be coplanar with the fabric layer 100 or the support layer 200.

Tables 5, 6 and 7 show the mechanical properties of a cushion composite structure without local reinforcement structure, the cushion composite structure 3A with the local reinforcement structures 400, and the cushion composite structure 3B with the local reinforcement structure 410, respectively.

**Table 5- Without local reinforcement structure**

| Maximum Strength (N) | Maximum Bending Stress (MPa) | Flexural Modulus (MPa) | String Flexural Modulus |
|---|---|---|---|
| Coating material A (material A) | | | |
| 62.6 | 7.664 | 310.542 | 313.966 |

| Coating material A (material B) | | | |
|---|---|---|---|
| 72.3 | 8.853 | 341.662 | 345.415 |

**Table 6- With local reinforcement structures 400**

| Maximum Strength (N) | Maximum Bending Stress (MPa) | Flexural Modulus (MPa) | String Flexural Modulus |
|---|---|---|---|
| Material A-disposed on a side adjacent to the fabric layer 100 | | | |
| 68.2 | 8.348 | 364.426 | 358.563 |

| Material A-disposed on a side adjacent to the support layer 200 | | | |
|---|---|---|---|
| 92 | 11.268 | 360.337 | 365.297 |

| Material B-disposed on a side adjacent to the fabric layer 100 | | | |
|---|---|---|---|
| 72.1 | 8.831 | 348.314 | 350.617 |

| Material B-disposed on a side adjacent to the support layer 200 | | | |
|---|---|---|---|
| 95 | 11.629 | 357.098 | 365.756 |

**Table 7- With local reinforcement structure 410**

| Maximum Strength (N) | Maximum Bending Stress (MPa) | Flexural Modulus (MPa) | String Flexural Modulus |
|---|---|---|---|
| Material A-disposed on a side adjacent to the fabric layer 100 | | | |
| 68.2 | 8.348 | 364.426 | 358.563 |

| Material A-disposed on a side adjacent to the support layer 200 | | | |
|---|---|---|---|
| 102 | 12.484 | 330.326 | 332.644 |

| Material B-disposed on a side adjacent to the fabric layer 100 | | | |
|---|---|---|---|
| 78 | 9.546 | 390.887 | 398.109 |

| Material B-disposed on a side adjacent to the support layer 200 | | | |
|---|---|---|---|
| 107 | 13.099 | 374.951 | 379.651 |

The properties in Tables 5 to 7 are measured by ASTM D790 standard test method. The mechanical properties (such as its maximum strength, maximum bending stress, flexural modulus, and string flexural modulus, etc.) of the cushion composite structures 3A or 3B may be enhanced after the local reinforcement structures 400 or 410 are provided when compared with the cushion composite structure without the local reinforcement structure in Table 5. As a result, the local strength of the cushion composite structures 3A or 3B may be further reinforced to meet various requirements.

In some embodiments, the local reinforcement structures 400 or 410 may include polymers such as polycaprolactone, polyurethane, etc. In some embodiments, the material of the local reinforcement structures 400 or 410 may be identical to that of the polymer layer 204 for easily controlling the strength of the cushion composite structures 3A or 3B. However, the present disclosure is not limited thereto. The local reinforcement structures 400 or 410 and the polymer layer 204 may be formed of different materials, depending on design requirements.

In some embodiments, an additional adhesive layer (not shown) may be provided between the fabric layer 100 and the support layer 200, and/or between the fabric layer 300 and the support layer 200. The adhesive layer may include identical meshes to the meshes H. The adhesive layer may include adhesive, hot-melt adhesive, such as including polymer like polycaprolactone or polyurethane. In some embodiments, the lamination of the fabric layer 100 and the support layer 200, or the lamination of the fabric layer 300 and the support layer 200 may be performed through the polymer 204.

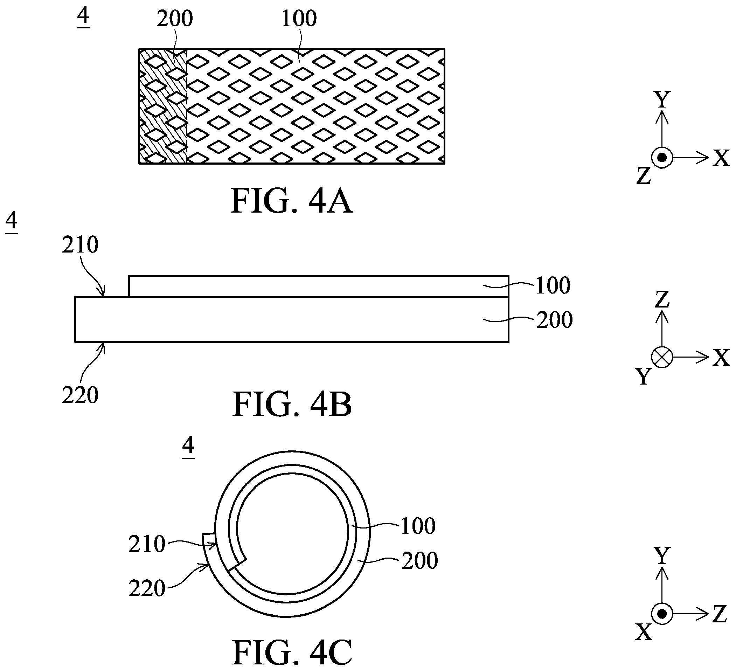

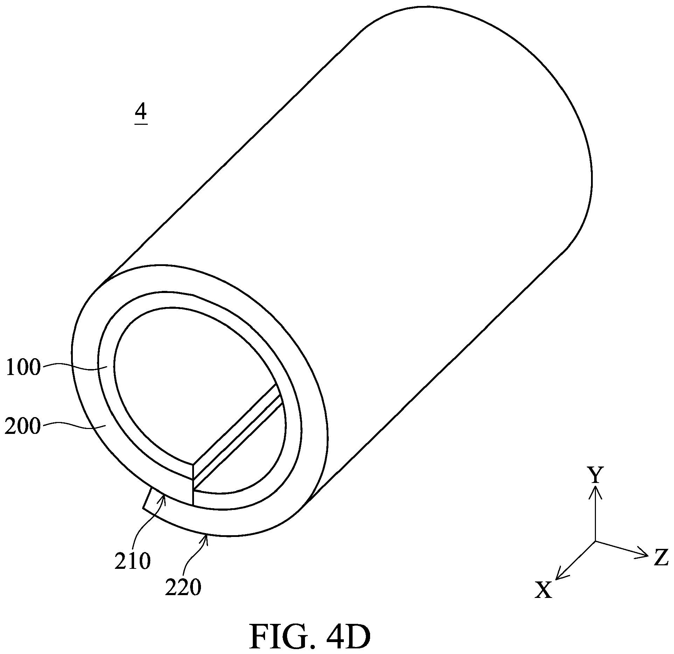

The aforementioned cushion composite structures may be heated at a relatively low temperature (such as a temperature between about 65°C to about 70°C) to be deformed, has good mechanical properties (such as having a Young's modulus higher than 10⁸ Pa) at room temperature (i.e. about 30°C), and has a fabric layer 100 which is friendly to the human body. As a result, the aforementioned cushion composite structures may be made into devices which come into contact with the human body, such as personal protective equipment and shoe pads, and they may be easily deformed by an ordinary user based on his or her particular requirements. For example, FIG. 4A is a top view of a cushion composite structure 4 in some embodiments of the present disclosure, and FIG. 4B is a cross-sectional view of the cushion composite structure 4. It should be noted that the support layer 200 of the cushion composite structure 4 is not fully covered by the fabric layer 100, and a portion of the upper surface 210 of the support layer 200 is exposed from the fabric layer 100. As a result, as shown in FIGs. 4C and 4D, the cushion composite structure 4 may be heated at a relatively low temperature (such as between about 65°C to about 70°C) and deformed as a cylindrical personal protective equipment (such as that used for replacing a plaster cast), and the upper surface 210 of the support layer 200 may be disposed on the lower surface 220 of the support layer 200. After the cushion composite structure 4 is cooled down (to room temperature, for example), the upper surface 210 and the lower surface 220 may be affixed together, and the shape of the cushion composite structure 4 may be fixed. As a result, the cushion composite structure 4 may easily be deformed by an ordinary user based on various requirements, so the cushion composite structure 4 may be suitable for different users (in that it fits a variety of different human body shapes). Furthermore, the cushion composite structure 4 may be reused to reduce cost, and may be flattened for storage to reduce the required storage space when it is not in use. It should be noted that the fabric layer 100 faces the inside (the side facing human body) when the cushion composite structure 4 acts as protective equipment (such as being a helmet, a shin bone protector, a neck protector, a waist protector, etc.) in FIG. 4D, and the cushion composite structure 4 has meshes, so breathability and comfort may be increased.

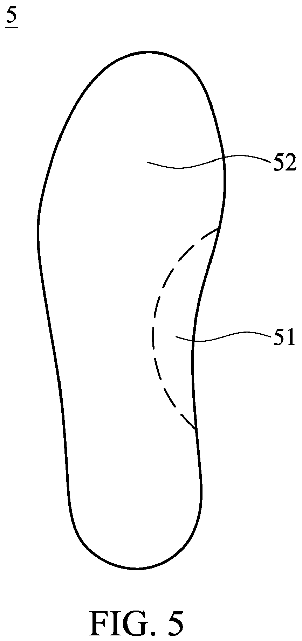

In some embodiments, the aforementioned cushion composite structures may be made into a shoe pad, such as the shoe pad 5 in FIG. 5. The shoe pad 5 may include a cushion portion 52 and an arch portion 51 arched from the cushion portion 52. The shoe pad 5 is formed of the aforementioned thermal deformable cushion composite structure, so the shape of the arch portion 51 may be adjusted by being heated at a relatively low temperature to fit different size feet. Moreover, the cushion composite structure has good mechanical properties at room temperature, so the durability of the shoe pad 5 may be enhanced. Furthermore, the cushion composite structures have meshes, so the breathability of the shoe pad 5 may be increased to make the user more comfortable.

In summary, the present disclosure provides a cushion composite structure, and a shoe pad and personal protective equipment using the same. It should be noted that the present disclosure is not limited thereto, the cushion composite structure which is deformable after being heated at a relatively low temperature and has good mechanical strength at room temperature may be made into different products, which may be deformed based on different user requirements, and the products have good mechanical performance at room temperature.

Although embodiments of the present disclosure and their advantages have been described in detail, it should be understood that various changes, substitutions and alterations can be made herein without departing from the scope of the disclosure as defined by the appended claims. Moreover, the scope of the present application is not intended to be limited to the particular embodiments of the process, machine, manufacture, and composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope of such processes, machines, manufacture, and compositions of matter, means, methods, or steps. In addition, each claim constitutes a separate embodiment, and the combination of various claims and embodiments are within the scope of the disclosure.

## Claims

1. A cushion composite structure having a plurality of meshes, comprising:
a support layer, comprising:
a support structure; and
a polymer layer disposed on the support structure and in the meshes, wherein a crystalline melting point of the polymer layer is lower than 70°C; and
a fabric layer disposed on the support layer.

2. The cushion composite structure as claimed in claim 1, further comprising a local reinforcement structure directly disposed on the support layer or the fabric layer, and disposed in the meshes.

3. The cushion composite structure as claimed in claim 2, wherein the local reinforcement structure comprises a plurality of local reinforcement units separated from each other by a distance.

4. The cushion composite structure as claimed in claim 3, wherein each of the local reinforcement units has a strip-shape.

5. The cushion composite structure as claimed in any one of the preceding claims, wherein the crystalline melting point of the polymer layer still remains after being heated over the crystalline melting point and cooled down, and is still reproducible after several repetitions.

6. The cushion composite structure as claimed in any one of the preceding claims, wherein the Shore durometer of the cushion composite structure is greater than 45 under 30°C, and is less than 2 under 70°C.

7. The cushion composite structure as claimed in any one of the preceding claims, wherein the polymer layer comprises chain-entangled polymer materials.

8. The cushion composite structure as claimed in any one of the preceding claims, wherein the support layer comprises meshes with a shrinkage ratio less than 50%.

9. The cushion composite structure as claimed in claim 8, further comprising an adhesive layer disposed between the support layer and the fabric layer, and the adhesive layer has meshes with identical shapes to the meshes of the support layer, preferably a lamination of the fabric layer and the support layer is performed through the polymer layer.

10. The cushion composite structure as claimed in claim 8 or 9, further comprising another fabric layer, wherein the two fabric layers are disposed on opposite sides of the support layer.

11. The cushion composite structure as claimed in any one of the claims 8, 9 or 10, wherein the support layer has a Young's modulus higher than 10⁸ Pa under room temperature.

12. The cushion composite structure as claimed in any one of the claims 8 - 11, wherein the polymer layer comprises a random copolymer or a block copolymer comprising at least one of the polyester, polyurethane, polyamide, or polyol.

13. A shoe pad made from the cushion composite structure as claimed in any one of the preceding claims, comprising:
a cushion portion; and
an arch portion arched from the cushion portion.

14. Personal protective equipment made from the cushion composite structure as claimed in any one of the preceding claims, wherein a portion of the support layer is exposed from the fabric layer.

15. The personal protective equipment as claimed in claim 14, wherein the personal protective equipment has a circular shape, and the fabric layer is positioned inside the personal protective equipment.
